# EUROPÄISCHE PATENTANMELDUNG

(11) **EP 3 266 296 A1**
(43) Veröffentlichungstag der Anmeldung: **10.01.2018**
(21) Anmeldenummer: 17401063.7
(22) Anmeldetag: 27.06.2017
(51) Int. Cl.: A01C 17/00

(54) **LANDWIRTSCHAFTLICHE TRANSPORTEINRICHTUNG SOWIE VERFAHREN ZUR ERMITTLUNG DES MASSENSTROMES BEZIEHUNGSWEISE DES GEWICHTS EINES AUSZUBRINGENDEN PRODUKTS**

(30) Priorität: 07.07.2016 DE 102016112443
(71) Anmelder: Amazonen-Werke H. Dreyer GmbH & Co. KG, 49205 Hasbergen (DE)
(72) Erfinder: Meyer zu Hoberge, Jörg, 49492 Westerkappeln (DE); Mertens, Daniel, 26121 Oldenburg (DE)

(57) **Zusammenfassung**

Es wird eine landwirtschaftliche Transporteinrichtung (1) mit einem Behälter (2) zur Aufnahme eines auszubringenden Produkts vorgestellt, wobei der Behälter (2) mittels eines, durch das Gewicht des Behälters (2) belasteten Tragelementes (3, 4, 5) in der Transporteinrichtung (1) aufgenommen ist und an oder in dem Tragelement (3, 4, 5) eine zur Bestimmung des Gewichts des in dem Behälter (2) enthaltenen Produkts geeignete und mit einer Recheneinheit (6) kombinierte Verformungsmesseinrichtung (7) vorhanden ist. Erfindungsgemäß bleibt dabei die Tragstruktur des Tragelements (3, 4, 5) in dem die Verformungsmesseinrichtung (7) aufnehmenden Abschnitt erhalten. Darüber hinaus werden ein Verfahren zur Ermittlung des Massenstromes **ṁ** eines mit Hilfe einer derartigen Transporteinrichtung auszubringenden Produkts sowie zwei Verfahren zur Bestimmung des Gewichts des in einem Behälter (2) einer derartigen landwirtschaftlichen Transporteinrichtung aufgenommenen Produkts beschrieben.

## Beschreibung

Die Erfindung betrifft eine landwirtschaftliche Transporteinrichtung sowie ein Verfahren zur Ermittlung des Massenstromes und zwei Verfahren zur Bestimmung des Gewichts des in einem Behälter einer derartigen landwirtschaftlichen Transporteinrichtung aufgenommenen Produkts.

Aus der DE 199 53 069 A1 ist bereits eine landwirtschaftliche Transporteinrichtung mit einem Behälter zur Aufnahme eines auszubringenden Produkts bekannt, wobei der Behälter mittels eines durch das Gewicht des Behälters belasteten Tragelementes in der Transporteinrichtung aufgenommen ist. Als Tragelement dient bei dieser Lösung ein erster Rahmen, der mit einem zusätzlichen, zweiten Vorsatzrahmen gekoppelt ist. Eine der Verbindungen zwischen dem Rahmen und dem Vorsatzrahmen kann nach der Lehre dieser Druckschrift durch eine Wiegezelle ersetzt werden, die folglich zusammen mit einer Recheneinheit eine Verformungsmesseinrichtung bildet. Über die durch die Wiegezelle ermittelte Verformung kann auf diese Weise das Gewicht des Behälters bestimmt werden. Als nachteilig hat sich bei einer derartigen Lösung erwiesen, dass hier ein Rahmen und ein zusätzlicher Vorsatzrahmen erforderlich sind, zwischen denen die Wiegezelle vorzusehen ist. Der Herstellungsaufwand einer derartigen landwirtschaftlichen Transporteinrichtung und ihr Gewicht sind damit hoch und die Montage ist vergleichsweise aufwändig. Durch die Kopplung zweier Rahmen wird zudem in nachteiliger Weise die Tragstruktur des Tragelements unterbrochen.

Aus der DE 44 17 549 A1 ist darüber hinaus eine Anordnung zur Dosierung und Verteilung von Streugut bekannt, bei der es sich im Wortsinn der vorliegenden Lösung um ein auszubringendes Produkt handelt. Dieses Verfahren dient dazu, sehr genaue Aussagen über die Menge des ausgebrachten Produkts und damit eine sehr gezielte Verteilung zu erreichen. Handelt es sich bei dem auszubringenden Produkt beispielsweise um Dünger, so wird durch dieses Verfahren eine Überdüngung oder eine zu geringe Düngung wirksam vermieden.

Dabei ist mindestens ein durch einen über ein Druckmittel angetriebenen Hydromotor rotierend bewegter Streuteller zur Ausbringung körner- oder pulverförmiger Produkte vorhanden. Eine Recheneinheit erfasst zudem als Eingangsgrößen die Drehzahl des Hydromotors, den Druck des Druckmittels und einen Sollwert für die geforderte Dosiermenge des auszubringenden Produkts und als Stellgrößen ein Steuersignal für eine Dosiervorrichtung zur Dosierung des Produkts und ein Steuersignal für die Regelung der Drehzahl des Hydromotors.

Der Erfindung liegt die Aufgabe zugrunde, eine landwirtschaftliche Transporteinrichtung bereitzustellen, die möglichst mit einfachen Mitteln eine hinreichend genaue Bestimmung des in dem Behälter der Transporteinrichtung vorhandenen und auszubringenden Produkts erlaubt. Darüber hinaus ist wenigstens ein Verfahren anzugeben, mittels dessen das Gewicht des auszubringenden Produkts ermittelt werden kann.

Die Erfindung löst diese Aufgabenstellung mit den Merkmalen der unabhängigen Patentansprüche 1, 13, 14 und 17.

Weitere Ausgestaltungen der Erfindung sind Gegenstand der vorhandenen Unteransprüche.

Eine landwirtschaftliche Transporteinrichtung mit einem Behälter zur Aufnahme eines auszubringenden Produkts, wobei der Behälter mittels eines, durch das Gewicht des Behälters belasteten Tragelementes in der Transporteinrichtung aufgenommen ist und an oder in dem Tragelement eine zur Bestimmung des Gewichts des in dem Behälter enthaltenen Produkts geeignete und mit einer Recheneinheit kombinierte Verformungsmesseinrichtung vorhanden ist, wurde erfindungsgemäß dahingehend weitergebildet, dass die Tragstruktur des Tragelements in dem die Verformungsmesseinrichtung aufnehmenden Abschnitt erhalten bleibt.

Im Unterschied zu den aus dem Stand der Technik bekannten Lösungen, bestehend aus einem ersten Rahmen und einem Vorsatzrahmen, die durch eine Wiegezelle verbunden sind, wird mit der Erfindung eine Tragstruktur zur Verfügung gestellt, bei der das Tragelement nicht aufgetrennt und damit in seiner Stabilität nicht beeinträchtigt werden muss, um eine Bestimmung des Gewichts des in dem von dem Tragelement aufgenommenen Behälter enthaltenen und auszubringenden Produkts vorzunehmen. Damit vereinfacht sich eine derartige Ausführung signifikant, was sich positiv auf den Herstellungsaufwand und den erforderlichen Montageaufwand auswirkt.

Eine erste Ausgestaltung der Erfindung ist darin zu sehen, dass die Verformungsmesseinrichtung an der biegeweichsten Position des Tragelementes angeordnet ist. An einer derartigen Stelle ist die Verformung am größten, was sich positiv auf die Messgenauigkeit auswirkt.

Neben dem Umstand, dass zur Auffindung der biegeweichsten Position des Tragelementes häufig die Erfahrung eines hiermit befassten Fachmannes ausreicht, geht ein sehr vorteilhafter, die Genauigkeit verbessernder Lösungsvorschlag dahin, die biegeweichste Position des Tragelementes mit Hilfe der Finite-Elemente-Methode (FEM) zu bestimmen. Hierzu stehen heutzutage Rechenanlagen zur Verfügung, mit deren Hilfe eine derartige Berechnung unter vertretbarem Zeitaufwand durchführbar ist.

Ein ganz wesentlicher Aspekt der vorliegenden Erfindung ist darin zu sehen, dass die Verformungsmesseinrichtung als ein nachrüstbarer Bausatz ausgeführt ist. Damit bietet sich die Möglichkeit, eine derartige Messeinrichtung nicht nur an neuen Transporteinrichtungen vorzusehen, sondern auch bereits vorhandene Technik mit einer derartigen Verformungsmesseinrichtung auszustatten, was sich für den Besitzer einer derartigen Transporteinrichtung kostensenkend auswirkt.

Als Tragelement kann ganz allgemein ein auf Torsion belasteter Torsionsbalken und/oder eine den Behälter tragende Stütze und/oder ein den Behälter tragender Rahmen zum Einsatz kommen. Dabei ist der eingangs genannte Grundgedanke von Bedeutung, nach dem trotz der vorhandenen Verformungsmesseinrichtung die eigentliche Tragstruktur des Tragelements erhalten bleibt und dies unabhängig davon, ob die Verformungsmesseinrichtung von Anfang an vorhanden war oder nachgerüstet wurde.

Selbstverständlich liegt es auch im Bereich der Erfindung, dass die Transporteinrichtung mehrere Tragelemente aufweist, sodass folglich auch mehrere, auf Torsion belastete Torsionsbalken und/oder den Behälter tragende Stützen und/oder den Behälter tragende Rahmenelemente vorhanden sind, wobei zumindest eines dieser Tragelemente eine Verformungsmesseinrichtung aufweist. Dabei ist es möglich, dass einzelne Tragelemente oder mehrere Tragelemente der vorgenannten Ausführungen miteinander kombiniert werden. So kann die Transporteinrichtung zum Beispiel einen Rahmen und auch einen Torsionsbalken aufweisen.

Es hat sich darüber hinaus als besonders vorteilhaft erwiesen, wenn das mindestens eine Tragelement eine Dreipunktbefestigung des Behälters bildet. Mit einer derartigen Befestigung lässt sich eine stabile Lagerung des Behälters erreichen, wobei gleichzeitig Bauelemente und damit Material eingespart werden können. Eine derartige Transporteinrichtung ist folglich einfacher aufgebaut, als bekannte Ausführungen.

Zur Kalibrierung und zur exakten Erfassung des in dem Behälter enthaltenen Produkts ist es erforderlich, einen Vergleichswert zur Verfügung zu haben, bei dem es sich vorzugsweise um das Leergewicht des Behälters handelt. Wird dieses Leergewicht des Behälters als von dem erfassten Gesamtgewicht abzuziehende Größe in der Recheneinheit hinterlegt, lässt sich das Gewicht des im Behälter vorhandenen und auszubringenden Produkts sehr genau bestimmen.

Zur Erfassung des Gewichts des in dem Behälter vorhandenen Produkts sind unterschiedliche Messmethoden anwendbar. Eine sehr vorteilhafte und einfach umzusetzende Lösung ist darin zu sehen, dass die mit der Recheneinheit verbundene Verformungsmesseinrichtung der erfindungsgemäßen landwirtschaftlichen Transporteinrichtung mindestens ein Dehnmesselement aufweist oder die Verformungsmesseinrichtung ein Dehnmesselement ist. Derartige Dehnmesselemente sind auch als standardisierte Messelemente in Form von Dehnmessstreifen erhältlich und können dem Erfindungsgrundgedanken folgend zum Beispiel auf die Oberfläche des Tragelementes aufgebracht werden.

Dies führt in vorteilhafter Weise dazu, dass auch eine einfache nachträgliche Nachrüstung möglich ist und keinerlei Eingriff in die Tragstruktur des Tragelements notwendig ist. Um die sensiblen Dehnmesselemente vor Beschädigungen zu schützen, ist es jedoch von Vorteil, wenn diese beispielsweise in eine im Tragelement vorhandene Mulde oder unter einer Schutzschicht auf das Tragelement aufgebracht sind.

Eine andere oder ergänzende Methode zur Ermittlung des Gewichts des in dem Behälter enthaltenen Produkts ist gemäß einer Ausgestaltung der Erfindung darin zu sehen, dass zumindest ein zum Einsatz kommendes Dehnmesselement ein Einpresssensor ist. Derartige Einpresssensoren verfügen zum Teil sogar über inegrierte Verstärker und weisen heute in Abhängigkeit von der Einbausituation hohe Genauigkeiten auf.

Ein handelsüblicher und daher bekannter Einpresssensor verfügt zum Beispiel über folgende Parameter:
- Ausgangssignal: 4...20 mA bei einer 2-Leitertechnik oder
- 0...10 VDC bei einer 3-Leitertechnik und
- Dehnungen von 0,1‰ bis 0,25‰.

Einpresssensoren wurden speziell für Anwendungen entwickelt, in denen Verformungen aufgrund von äußeren Kräften in bestehenden Bauteilen gemessen werden sollen. Durch die Einpressung ist eine einfache Montage möglich und ein bestehendes Bauteil bekommt dadurch die Eigenschaften eines Kraftaufnehmers. Zum Einsatz kommt in derartigen Einpresssensoren ein Dünnfilm-Implantat. Diese Dünnfilmsensoren verfügen über alle Vorteile der konventionellen Folien-Dehnmessstreifen (=DMS), ohne jedoch mit deren Nachteilen, wie einem Temperaturgang, einer Klebung beziehungsweise dem bekannten Kriechen, behaftet zu sein.

Wenn eine mechanische Konstruktion einer Belastung ausgesetzt wird, ändert sich ihre Form. Platziert man an geeigneter Stelle eine Bohrung, so verformt sich diese ebenfalls. Aus der runden Bohrung wird auf diese Weise unter Belastung beispielsweise eine ovale Bohrung. Der Einpresssensor verformt sich in gleicher Weise und erfasst so sehr genau die resultierenden Druck-, Zug- und Schubspannungen.

Diesen Erkenntnissen entsprechend wird erfindungsgemäß vorgesehen, dass der Einpresssensor in eine Bohrung des den Behälter tragenden Torsionsbalkens, der den Behälter tragenden Stütze oder des den Behälter tragenden Rahmens eingesetzt wird.

Mit den vorstehend beschriebenen Maßnahmen lässt sich das Gewicht des in dem Behälter aufgenommenen Produkts sehr einfach und genau bestimmen. Dennoch ist es von entscheidendem Vorteil, wenn eine ergänzende Erfassung des Gewichts erfolgt, beispielsweise indem die Ausbringrate des Produkts also die Ausbringmenge pro Zeiteinheit fortwährend ermittelt wird. Dies hat einerseits den Vorteil einer höheren Genauigkeit und Aussagekraft des ermittelten Wertes und ist zudem sinnvoll, wenn beispielsweise eine Messmethode ausfallen sollte.

Hierzu wird entsprechend einer Weiterbildung der Erfindung bei einem Schleuderstreuer vorgeschlagen, das Antriebsdrehmoment mindestens einer der mechanisch, hydraulisch oder elektrisch angetriebenen Schleuderscheiben zu ermitteln. Aus diesem lässt sich bei bekanntem Antriebsdrehmoment im Leerlaufbetrieb der Schleuderscheiben die derzeit ausgebrachte Menge an Produkt, also die Ausbringrate pro Zeiteinheit ermitteln und somit eine ergänzende Ausbringmengenbestimmung zur Gewichtsermittlung durchführen. Eine derartige Lösung ist bereits aus der eingangs zitierten DE 44 17 549 A1 bekannt, wobei die erfindungsgemäße Lösung darin zu sehen ist, dass diese bekannte Maßnahme zusätzlich zu der vorliegenden Erfindung, also in Kombination mit dieser zum Einsatz kommt. Dies hat auch zur Folge, dass bezüglich der in der DE 44 17 549 A1 beschriebenen Ausführung hier vollinhaltlich auf diese Druckschrift Bezug genommen wird.

Bei einer Sämaschine kann ebenfalls vorgesehen sein eine ergänzende Gewichtsermittlung durchzuführen. Diese kann beispielsweise analog zur oben erwähnten Ausgestaltung eines Schleuderstreuers darin bestehen eine fortwährende bzw. wiederholte Ermittlung der Ausbringrate durchzuführen. Die Ausbringrate kann beispielsweise aus der Anzahl der Umdrehungen einer Dosiertrommel ermittelt werden. Hierbei kann eine Kalibrierung der Dosiertrommel bzgl. des jeweils verwendeten Saatgutes oder Düngers mittels einer Abrehprobe erforderlich sein. Alternativ kann ein Körnerzähler verwendet werden oder bei einer Einzelkornsämaschine die Umdrehungen einer Vereinzelungseinrichtung, wie beispielsweise einer Vereinzelungsscheibe oder einer Vereinzelungstrommel gemessen und hieraus fortwährend oder wiederholt die Ausbringrate bestimmt werden.

Darüber hinaus betrifft die vorliegende Erfindung ein Verfahren zur Bestimmung des Gewichts des in einem Behälter einer landwirtschaftlichen Transporteinrichtung aufgenommenen Produkts, das durch folgende Verfahrensschritte gekennzeichnet ist:
- Kalibrierung der Verformungsmesseinrichtung, bevor der Behälter mit dem auszubringenden Produkt befüllt wird und Speicherung des somit ermittelten Leergewichts des Behälters in der Recheneinheit,
- periodische Messung der durch das Gewicht des in dem Behälter enthaltenen Produkts bedingten Verformung des Tragelements,
- rechnerische Bestimmung des Gewichts des in dem Behälter enthaltenen Produkts mit Hilfe der Recheneinheit durch Bildung der Differenz zwischen dem erfassten Gesamtgewicht und dem in der Recheneinheit hinterlegten Leergewicht des Behälters.

Bei dem vorgestellten Verfahren wird die Kalibrierung nur einmalig oder jeweils vor der Füllung des Behälters mit dem auszubringenden Produkt durchgeführt, sodass das gesamte Verfahren sich relativ einfach gestaltet. Als periodische Messung kann dabei eine Zeitsteuerung verstanden werden, die in gleichmäßigen zeitlichen Abständen, also zum Beispiel jeweils nach 30 Sekunden, eine Messung durchführt. Bei bekanntem Massenstrom und bekannter Start- bzw. Restmasse des Produkts ist eine Prognose möglich, wann der Behälter leer sein wird. der Benutzer kann dann bspw. im Vorgewende entscheiden, ob der Füllstand für eine weitere Überfahrt reicht oder vorher nachgefüllt werden sollte, damit der Behälter nicht während der Arbeit leer läuft. Fehler bei der Ausbringung werden somit minimiert, da der Behälter nicht unbemerkt leer laufen kann.

Eine erste Ausgestaltung des Verfahrens sieht vor, dass vor der Anbringung der mindestens einen Verformungsmesseinrichtung an der biegeweichsten Position des Tragelements eine einmalige Bestimmung der biegeweichsten Position des Tragelements erfolgt. Die biegeweichste Stelle des Tragelementes zu verwenden hat den Vorzug, dass hier die gewichtsbedingte Verformung am größten ist und sich somit an dieser Position die genauesten Werte bestimmen lassen.

Die Bestimmung der biegeweichsten Stelle des Tragelements kann entsprechend einem weiterführenden Vorschlag der Erfindung mittels der Finite-Elemente-Methode erfolgen.

Ein weiteres erfindungsgemäßes Verfahren betrifft ebenfalls die Bestimmung des Gewichts des in einem Behälter einer landwirtschaftlichen Transporteinrichtung aufgenommenen Produkts, wobei dieses Verfahren dadurch gekennzeichnet ist, dass zur Verbesserung der Genauigkeit der Messung des Gewichts des in dem Behälter enthaltenen Produkts als in der Recheneinheit verarbeitete Größe die Neigung des Behälters mittels einer Neigungsmesseinrichtung und/oder mittels eines GPS-Signals in Verbindung mit in der Recheneinheit hinterlegten Kartendaten und/oder mittels von einer Erfassung der Stellung einer Dreipunktkupplung stammender Stell- beziehungsweise Messsignale bestimmt wird.

Da die Messergebnisse der Verformungsmesseinrichtung von der Neigung des Behälters bzw. der Transporteinrichtung abhängen können, reduziert die Berücksichtigung der Neigung bei der Bestimmung des Behältergewichts mögliche Ungenauigkeiten. Insbesondere bei mehreren Tragelementen von denen nur ein Teil mit einer Verformungsmesseinrichtung ausgestattet ist, kann der jeweilige Anteil der Belastung der Tragelemente von der jeweiligen Lage der Transporteinrichtung bezogen auf die Richtung der Schwerkraftwirkung abhängen. Dieses wird in vorteilhafterweise Berücksichtigt, wenn die Neigung des Behälters der Transporteinrichtung bei der Gewichtsermittlung berücksichtigt wird.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung des Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Fig. 1: eine erste Ausführungsvariante einer landwirtschaftlichen Transporteinrichtung perspektivisch von vorn,
- Fig. 2: den Grundrahmen ersten Ausführungsvariante von schräg hinten,
- Fig. 3: eine zweite Ausführungsvariante einer landwirtschaftlichen Transporteinrichtung perspektivisch von vorn
und
- Fig. 4: den vergrößerten Ausschnitt IV aus Fig. 3.

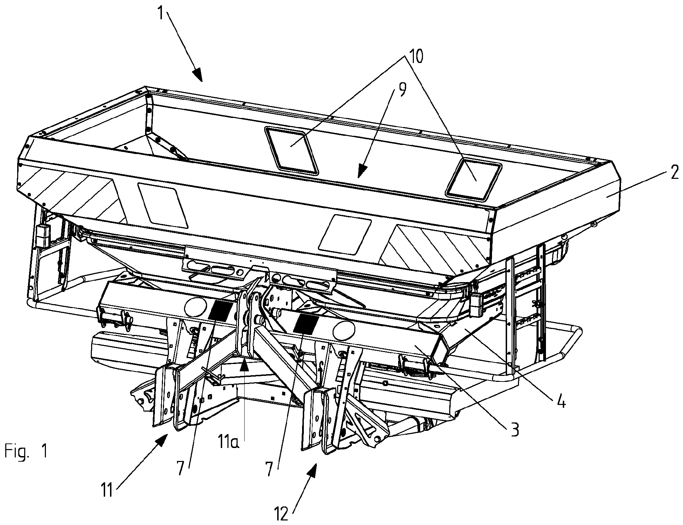

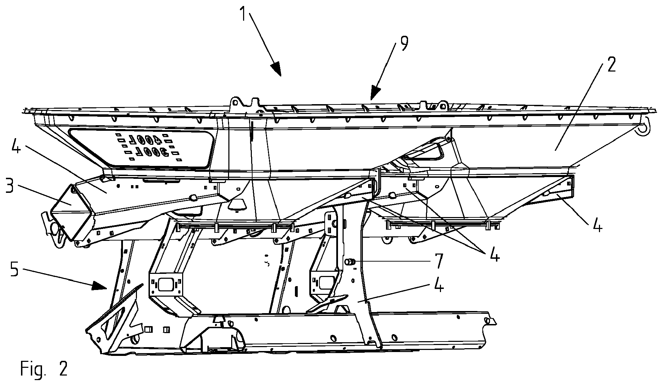

Die Fig. 1 zeigt eine erste Ausführungsvariante einer landwirtschaftlichen Transporteinrichtung 1, die einen Behälter 2 aufweist, über dessen nach oben offene Öffnung 9 ein auszubringendes körniges oder pulverförmiges Produkt, beispielsweise Dünger oder Saatgut, eingefüllt werden kann. Unterhalb des Behälters 2 ist darüber hinaus eine Vorrichtung zur Ausbringung und gleichmäßigen Verteilung des Produkts vorhanden, die in der Fig. 1 jedoch nicht sichtbar ist. Hierbei kann es sich zum Beispiel um einen Streuteller handeln. Die Transporteinrichtung 1 wird insgesamt von einem Fahrzeug gezogen oder an dieses angebaut. Auf ihrer dem ziehenden Fahrzeug zugewandten Seite weist sie zwei mit einem Abstand zueinander angeordnete untere Halter 11 und 12 sowie einen mittig darüber angeordneten oberen Halter 11 a auf, über die eine Kopplung mit dem Dreipunktkraftheber des Fahrzeugs erfolgt. Eine Besonderheit des Behälters 2 besteht darin, dass dieser mehrere Fenster 10 aufweist, die zur visuellen Kontrolle des Füllstandes einen Einblick in den Innenraum des Behälters 2 möglich machen. Der Behälter 2 ist bei dem in Fig. 1 dargestellten Beispiel mit seiner Unterseite auf Tragblechen 4 abgestützt, wie auch in Fig. 2 dargestellt, wobei die Tragbleche 4 wiederum mit einem als Torsionsbalken ausgeführten Tragelement 3 verbunden sind, der durch das Gewicht des Behälters 2 auf Torsion belastet wird. Die dadurch im Torsionsbalken 3 verursachte Verformung wird über zwei, mit einem Abstand zueinander angeordnete Dehnmessstreifen ermittelt und stellt eine Messgröße für das Gewicht des Behälters 2 dar. Die Dehnmessstreifen bilden zusammen mit einer in der Fig. 1 nicht gezeigten Recheneinheit 6, die an der Transporteinrichtung oder am Fahrzeug angeordnet sein kann, eine Verformungsmesseinrichtung 7.

Fig. 2 zeigt den Grundbehälter ohne Aufsatz und ergänzende Bauteile sowie den Rahmen des in Fig.1 dargestellten Ausführungsbeispiels mit dem Torsionsbalken 3 und dem Rahmen 5, wobei hier ergänzend oder alternativ zur der in Fig. 1 gezeigten Ausführung mit zwei Dehnmessstreifen an dem Torsionsbalken 4 ein Einpresssensor als Verformungsmesseinrichtung 7 zum Einsatz kommt, der in eine Bohrung in einer ebenfalls vorhandenen Stütze 4 eingepresst ist.

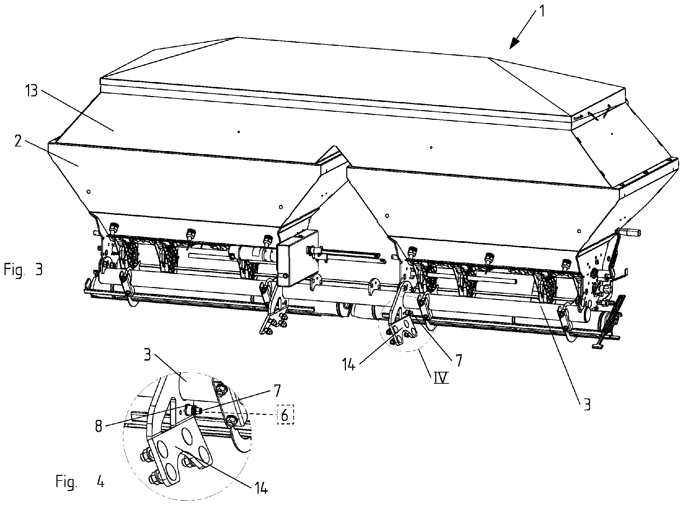

Aus der Fig. 3 geht eine landwirtschaftliche Transporteinrichtung 1 hervor, bei der die Öffnung 9 des Behälters 2 durch einen lösbar befestigten Deckel 13 verschlossen ist. Eine Besonderheit dieser Ausführung besteht hier darin, dass im Bereich des vorhandenen Torsionsbalkens 3 zwei zueinander benachbarte und einen Abstand zueinander aufweisende Flansche 14 zur Kopplung mit einem nicht dargestellten Tragrahmen vorhanden sind. Die Einzelheit IV der Fig. 3 ist in der Fig. 4 vergrößert dargestellt.

Oberhalb dieses Flansches 14 ist eine Bohrung 8 eingebracht, in die ein eine Verbindung zu einer Recheneinheit 6 aufweisender Einpresssensor als Verformungsmesseinrichtung 7 eingepresst ist. In der Recheneinheit 6 werden die erfassten Messwerte und Daten verarbeitet. Das in der Recheneinheit 6 gespeicherte Leergewicht des Behälters 2 bzw. der hierzu korrespondierende Messwert des Einpresssensors dient dabei der Differenzbildung mit dem ermittelten Wert für das Gewicht des befüllten Behälters 2, sodass aus dieser Differenz das Gewicht des in dem Behälter 2 aufgenommenen Produkts bestimmt werden kann. Hierzu sind vorzugsweise Eichkurven oder funktionale Zusammenhänge in der Recheneinheit hinterlegt, um den Messwerten das entsprechende Behältergewicht zuordnen zu können.

### BEZUGSZEICHENLISTE:

- 1: landwirtschaftliche Transporteinrichtung
- 2: Behälter
- 3: Tragelement
- 4: Tragelement
- 5: Tragelement
- 6: Recheneinheit
- 7: Verformungsmesseinrichtung
- 8: Bohrung
- 9: Öffnung
- 10: Fenster
- 11: Kupplungselement
- 11a: Kupplungselement
- 12: Kupplungselement
- 13: Deckel
- 14: Flansch

## Patentansprüche

1. Landwirtschaftliche Transporteinrichtung (1) mit einem Behälter (2) zur Aufnahme eines auszubringenden Produkts, wobei der Behälter (2) mittels eines, durch das Gewicht des Behälters (2) belasteten Tragelementes (3, 4, 5) in der Transporteinrichtung (1) aufgenommen ist und an oder in dem Tragelement (3, 4, 5) eine zur Bestimmung des Gewichts des in dem Behälter (2) enthaltenen Produkts geeignete und mit einer Recheneinheit (6) kombinierte Verformungsmesseinrichtung (7) vorhanden ist, **dadurch gekennzeichnet, dass** die Tragstruktur des Tragelements (3, 4, 5) in dem die Verformungsmesseinrichtung (7) aufnehmenden Abschnitt erhalten bleibt.

2. Landwirtschaftliche Transporteinrichtung nach Anspruch 1, **dadurch gekennzeichnet, dass** die Verformungsmesseinrichtung (7) an der biegeweichsten Position des Tragelementes (3, 4, 5) angeordnet ist.

3. Landwirtschaftliche Transporteinrichtung nach Anspruch 2, **dadurch gekennzeichnet, dass** die biegeweichste Position des Tragelementes (3, 4, 5) mit Hilfe der Finite-Elemente-Methode (FEM) bestimmt ist.

4. Landwirtschaftliche Transporteinrichtung nach einem der vorstehend genannten Ansprüche, **dadurch gekennzeichnet, dass** die Verformungsmesseinrichtung (7) als ein nachrüstbarer Bausatz ausgeführt ist.

5. Landwirtschaftliche Transporteinrichtung nach einem der vorstehend genannten Ansprüche, **dadurch gekennzeichnet, dass** als Tragelement ein auf Torsion belasteter Torsionsbalken (3) und/oder eine den Behälter (2) tragende Stütze (4) und/oder ein den Behälter (2) tragender Rahmen (5) zum Einsatz kommt beziehungsweise zum Einsatz kommen.

6. Landwirtschaftliche Transporteinrichtung nach einem der vorstehend genannten Ansprüche, **dadurch gekennzeichnet, dass** die Transporteinrichtung mehrere Tragelemente (3, 4, 5) aufweist, sodass mehrere auf Torsion belastete Torsionsbalken (3) und/oder den Behälter (2) tragende Stützen (4) und/oder den Behälter (2) tragende Rahmenelemente (5) vorhanden sind, wobei zumindest eines dieser Tragelemente (3, 4, 5) eine Verformungsmesseinrichtung (7) aufweist.

7. Landwirtschaftliche Transporteinrichtung nach einem der vorstehend genannten Ansprüche, **dadurch gekennzeichnet, dass** das mindestens eine Tragelement (3, 4, 5) eine Dreipunktbefestigung des Behälters (2) bildet.

8. Landwirtschaftliche Transporteinrichtung nach einem der vorstehend genannten Ansprüche, **dadurch gekennzeichnet, dass** das Leergewicht des Behälters (2) als von dem erfassten Gesamtgewicht abzuziehende Größe in der Recheneinheit (6) hinterlegt ist.

9. Landwirtschaftliche Transporteinrichtung nach einem der vorstehend genannten Ansprüche, **dadurch gekennzeichnet, dass** die Verformungsmesseinrichtung (7) mindestens ein Dehnmesselement aufweist oder die Verformungsmesseinrichtung (7) ein Dehnmesselement ist.

10. Landwirtschaftliche Transporteinrichtung nach Anspruch 9, **dadurch gekennzeichnet, dass** zumindest ein zum Einsatz kommendes Dehnmesselement ein Dehnmessstreifen oder ein Einpresssensor ist.

11. Landwirtschaftliche Transporteinrichtung nach Anspruch 10, **dadurch gekennzeichnet, dass** der Einpresssensor in eine Bohrung (8) des den Behälter (2) tragenden Torsionsbalkens (3), der den Behälter (2) tragenden Stütze (4) oder des den Behälter (2) tragenden Rahmens (5) eingesetzt ist.

12. Landwirtschaftliche Transporteinrichtung nach einem der vorstehend genannten Ansprüche, **dadurch gekennzeichnet, dass** mindestens ein Mittel zur Messung der Ausbringmenge pro Zeiteinheit vorgesehen ist, welches zur ergänzenden Bestimmung des Gewichts des ausgebrachten Produkts geeignet ist.

13. Verfahren zur Bestimmung des Gewichts des in einem Behälter (2) einer landwirtschaftlichen Transporteinrichtung (1) nach einem der Ansprüche 1 bis 12 aufgenommenen Produkts, **gekennzeichnet durch** folgende Verfahrensschritte:
- Kalibrierung der Verformungsmesseinrichtung (7), bevor der Behälter (2) mit dem auszubringenden Produkt befüllt wird und Speicherung des somit ermittelten Leergewichts des Behälters (2) in der Recheneinheit (6),
- periodische Messung der durch das Gewicht des in dem Behälter (2) enthaltenen Produkts bedingten Verformung des Tragelements (3, 4, 5),
- rechnerische Bestimmung des Gewichts des in dem Behälter (2) enthaltenen Produkts mit Hilfe der Recheneinheit (6) durch Bildung der Differenz zwischen dem erfassten Gesamtgewicht und dem in der Recheneinheit hinterlegten Leergewicht des Behälters (2).

14. Verfahren nach Anspruch 13, **dadurch gekennzeichnet, dass** vor der Anbringung der mindestens einen Verformungsmesseinrichtung (7) an der biegeweichsten Position des Tragelements (3, 4, 5) eine einmalige Bestimmung der biegeweichsten Position des Tragelements (3, 4, 5) erfolgt.

15. Verfahren nach Anspruch 14, **dadurch gekennzeichnet, dass** die Bestimmung der biegeweichsten Stelle des Tragelements (3, 4, 5) mittels der Finite-Elemente-Methode erfolgt.

16. Verfahren zur Bestimmung des Gewichts des in einem Behälter (2) einer landwirtschaftlichen Transporteinrichtung (1) nach einem der Ansprüche 1 bis 15 aufgenommenen Produkts, **dadurch gekennzeichnet, dass** zur Verbesserung der Genauigkeit der Messung des Gewichts des in dem Behälter (2) enthaltenen Produkts als in der Recheneinheit (6) verarbeitete Größe die Neigung des Behälters (2) mittels einer Neigungsmesseinrichtung und/oder mittels eines GPS-Signals in Verbindung mit in der Recheneinheit (6) hinterlegten Kartendaten und/oder mittels von einer Erfassung der Stellung einer Dreipunktkupplung stammender Stell- beziehungsweise Messsignale bestimmt wird.
